# EUROPEAN PATENT APPLICATION

(11) **EP 1 905 500 A1**
(43) Date of publication of application: **02.04.2008**
(21) Application number: 06756448.4
(22) Date of filing: 22.05.2006
(51) Int. Cl.: B01D 35/02, B01D 24/00, F01M 11/03

(54) **OIL FILTER, SYSTEM AND METHOD FOR DETERIORATION CONTROL**

(30) Priority: 20.05.2005 JP 2005148008
(71) Applicant: Takahashi, Toshiaki, Kashima-shi Ibaraki 3112207 (JP); Seattle Catalyzer Laboratory Kabushiki Kaisha, Setagaya-ku Tokyo 1570067 (JP); Toda, Masayuki, Yonezawa-shi, Yamagata 992-0026 (JP)
(72) Inventor: TAKAHASHI, Junko, Yonezawa-shi, Yamagata 9920038 (JP); FUKUSHIMA, Shuta, 1570067 (JP)
(74) Representative: Dr. Weitzel & Partner
(86) International application number: PCT/JP2006/310142
(87) International publication number: WO 2006/123820

(57) **Abstract**

To provide a deterioration control oil filter capable of increasing an effect for purifying pollutants, floating matters, or the like in a lubricating oil or a hydraulic oil as well as increasing an effect for suppressing the oxidation of the lubricating oil or the hydraulic oil. A long filtration functioning distance using mineral particles 30 can be secured, since an oil inlet pipe 24 for discharging the lubricating oil or the hydraulic oil into the casing 29 is connected to a bottom center of the casing which is isolated from the atmosphere, an oil outlet pipe 25 is connected to a bottom of the casing 29, and the mineral particles 30 are provided in the casing 29 interspacially at an upper portion of the casing, thereby allowing the lubricating oil to circulate in the casing in an up-and-down direction.

## Description

### TECHNICAL FIELD

The present invention relates to an oil filter for removing sludge in a lubricating oil used for an internal combustion engine or the like. More specifically, it relates to the oil filter, a system, and a method having a function for suppressing deterioration of the lubricating oil caused by, for example, oxidization and a function for decreasing dissolved oxygen in the lubricating oil.

### BACKGROUND ART

Patent Literature 1 : JP-A-2001-137623

An internal combustion engine or the like employs an oil filter for removing floating matters such as sludge from a lubricating oil.

Structure of an oil filter and a usage environment thereof disclosed in Patent Literature 1 will be described below with reference to the accompanying drawings.

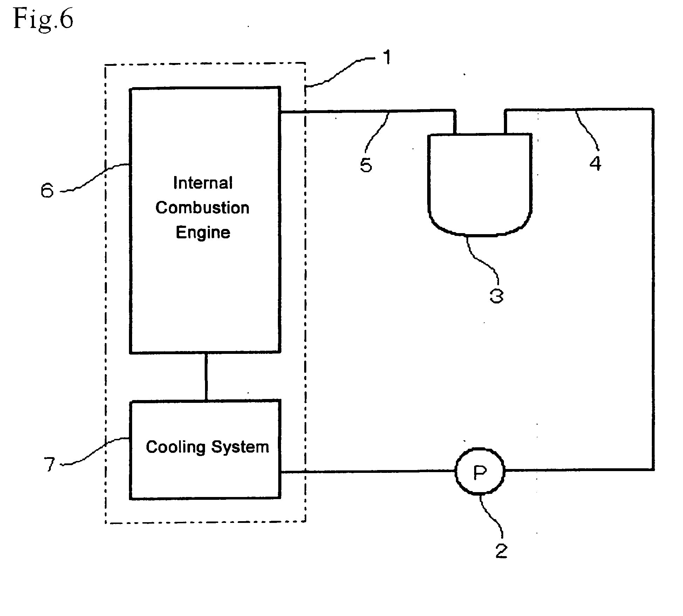

As shown in Fig. 6, a lubricating oil system 1 includes a pump 2 for circulating the lubricating oil and an oil filter 3 for purifying the lubricating oil, which are connected to each other by an oil inlet pipe 4 and an oil outlet pipe 5 formed into piping (or horse, or the like) with a heat resistant/oil resistance material.

The lubricating oil system 1 includes an internal combustion engine 6 such as a gasoline-powered engine or a diesel engine and a cooling system 7 for cooling the lubricating oil such as an oil cooler or a radiator. The lubricating oil serves to reduce a sliding resistance of sliding surfaces of, for example, a piston and a cylinder for the internal combustion engine 6 as well as is employed as a cooling medium for preventing the internal combustion engine 6 from overheating. The pump 2 circulates the lubricating oil discharged from the lubricating oil system 1 so as to return it to the lubricating oil system 1 through the oil filter 3.

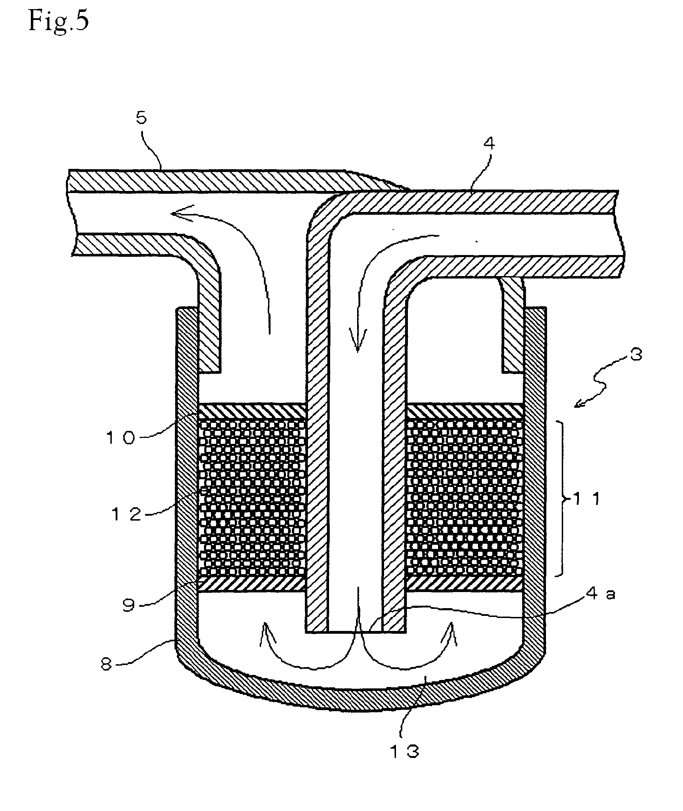

The oil filter 3, as shown in Fig. 5, includes a mineral particle chamber 11 formed in a casing 8 in a manner it is partitioned by an oil inlet side perforated partition board 9 and an oil outlet side perforated partition board 10. This mineral particle chamber 11 is filled with a lot of mineral particles 12 of chlorite schist.

The oil inlet side perforated partition board 9 and the oil outlet perforated partition board 10, for example, are made of a plate with through-holes of a size allowing the lubricating oil to pass therethrough but prohibiting the mineral particles 12 of the chlorite schist from flowing out of the mineral particle chamber 11, or a wire-netting including a mesh of which dimension is decided so as to allow the lubricating oil pass therethrough in a similar manner as the through-holes and prohibiting the mineral particles 12 form flowing out of the mineral particle chamber 11. Here, the number of the through-holes or the meshes is optional. For example, a lot of through-holes may be provided in a surface of the partition board in its entirety in order to decrease a load resistance when the lubricating oil passes through the partition board, or, for example, 2 or 3 through-holes may be provided as a necessity minimum number if a priority is given to the confinement of the mineral particles 12.

The oil inlet pipe 4 and the oil outlet pipe 5 each connected to the oil filter 3 have a removable structure for the sake of an exchange of the oil inlet side perforated partition board 9, the oil outlet side perforated partition board 10, and the mineral particles 12.

The oil inlet pipe 4 passes through the mineral particle chamber 11 from the top center of the casing 8 to discharge the lubricating oil from beneath the oil inlet side perforated partition board 9 while keeping an oil inlet pipe port 4a of the oil inlet pipe oriented downward. The oil outlet pipe 5 closes a top of the casing 9 so as to embrace the oil inlet pipe 4 and then passes through the oil inlet side perforated partition board 9, (the mineral particles 12 within) the mineral particle chamber 11, and the oil outlet side perforated partition board 10 to thereby feed the lubricating oil into the internal combustion engine 6.

At the time, the lubricating oil discharged from the oil inlet pipe port 4a of the oil inlet pipe 4 toward a bottom surface of the casing 8 will be regulated of its oil pressure within an inlet oil pressure regulating chamber 13 forming a space below the oil inlet side perforated partition board 9 to equally pressurize an oil inlet surface of the oil inlet side perforated partition board 9, resulting in passing through the through-holes or the meshes provided in the oil inlet side perforated partition board 9.

The lubricating oil having passed through the oil inlet side perforated partition board 9 enters into the mineral particle chamber 11, passes through clearances between the mineral particles 12 constituting a deterioration control filtering layer, and then passes through the through-holes or the meshes provided in the oil outlet side perforated partition board 10 to be discharged from the oil outlet pipe 5.

### DISCLOSURE OF THE INVENTION

### Problems to be Solved by the Invention

Since the above described conventional oil filter includes the mineral particles 12 within the mineral particle chamber 11 between the partition boards 9, 10 such that the mineral particles are tightly-packed within a limited space, the mineral particles 12 stay at generally the same positions even when the lubricating oil flows therethrough.

Therefore, a surface area of each of the mineral particles 12 is generally constant from a time of an initial setting, which raises problems that only a small amount of floating matters such as sludge can be removed and an effect of suppressing the oxidation of the lubricating oil cannot be very effective.

Since the lubricating oil passing through the mineral particle chamber 11 flows in one direction and only one way in order to be filtered, there has been such a problem that a sufficient filtering effect can not be securely produced if a height of the mineral particle chamber 11 is not enough, resulting in a less effect for suppressing the oxidation of the lubricating oil.

An object of the invention is to provide an oil filter and a system for deterioration control which can realize increase of an effect for purifying pollutants, floating matters, or the like in the lubricating oil and increase of an effect for suppressing the oxidation of the lubricating oil.

### Means for Solving the Problems

To achieve the above stated object, a deterioration control oil filter according to claim 1 of the present invention is a deterioration control filter including an oil inlet pipe which is connected to a bottom center of a casing and discharges a lubricating oil into the casing, an oil outlet pipe connected to a bottom of the casing, and mineral particles provided in the casing interspacially at an upper portion of the casing.

The deterioration control oil filter according to claim 2 is characterized in using the mineral particles containing mangan, nickel, iron or the like.

The deterioration control oil filter according to claim 3 is characterized in that the casing is isolated from the atmosphere.

A deterioration control oil system according to claim 4 is characterized in including: an oil tank for reserving oil from a line; a deterioration control oil filter having an oil inlet pipe which is connected to a bottom center of the casing and discharges the lubricating oil into the casing, an oil outlet pipe connected to a bottom of the casing, and mineral particles provided in the casing interspacially at an upper portion of the casing; and a pump for circulating the lubricating oil from the oil tank through the deterioration control oil filter.

The deterioration control oil system according to claim 5 is characterized in that the system is isolated from the atmosphere in its entirety.

A method of removing oxygen according to claim 6 is characterized in that Mn, Fe, Ni, or the like is dissolved within a lubricating oil to oxidize Mn, Fe, Ni, or the like by the oxygen within the lubricating oil, thereby removing the oxygen in the lubricating oil.

The method of removing oxygen according to claim 7 is characterized in that the oil is either one of a lubricating oil or a hydraulic oil.

### Effect of the Invention

According to the deterioration control oil filter of claim 1, since the lubricating oil circulates within the casing in an up-and-down direction, a long filtration functioning distance by using the mineral particles can be secured, such that increase of an effect of purifying pollutants, floating matters, or the like contained within the lubricating oil and increase of an effect for suppressing the oxidation of the lubricating oil or the hydraulic oil can be realized.

According to the deterioration control oil filter of claim 2, use of the mineral particles containing mangan enables an effective decreasing of the dissolved oxygen within the lubricating oil.

According to the deterioration control oil filter of claim 3, deterioration of the oil can be further suppressed.

According to an oil deterioration control system of claim 4, deterioration of the oil can be suppressed effectively.

According to the oil deterioration control system of claim 5, deterioration of the oil can be suppressed further effectively.

According to a method of removing oxygen of claim 6, oxygen within the oil can be removed inexpensively and with ease.

According to the method of removing oxygen of claim 7, a deterioration control of a lubricating oil or a hydraulic oil can be performed with ease.

### BRIEF DESCRIPTION OF THE DRAWINGS

Fig. 1 is a cross sectional view of a deterioration control oil filter according to an embodiment of the invention.

Fig. 2 is a comparative chart illustrating a reduction ratio of dissolved oxygen between mineral particles containing Mn and mineral particles without containing Mn.

Fig. 3 is a block diagram illustrating an exemplary arrangement of the deterioration control oil filter according the embodiment of the invention.

Fig. 4 is a conceptual diagram illustrating the deterioration control oil system according to the embodiment.

Fig. 5 is a cross sectional view of a conventional oil filter.

Fig. 6 is a block diagram illustrating an exemplary arrangement of a conventional oil filter.

### DESCRIPTION OF THE NUMERALS

- 21: lubricating oil system
- 22: pump
- 23: oil filter
- 24: oil inlet pipe
- 25: oil outlet pipe
- 26: internal combustion engine
- 27: cooling system
- 28: cover
- 29: casing
- 30: mineral particles
- 31: mineral particle chamber
- 32: filter
- 40: oil tank

### PREFERRED MODE FOR CARRYING OUT THE INVENTION

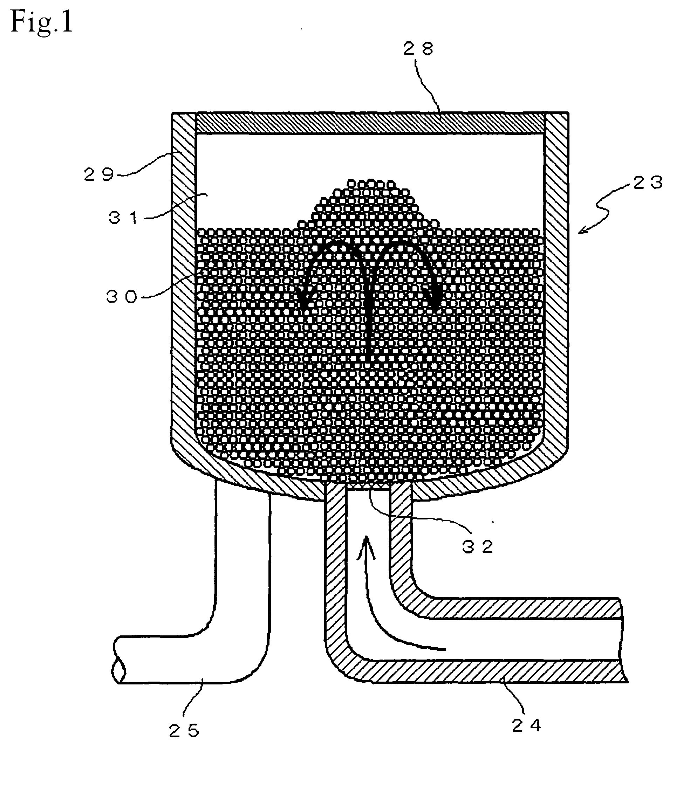

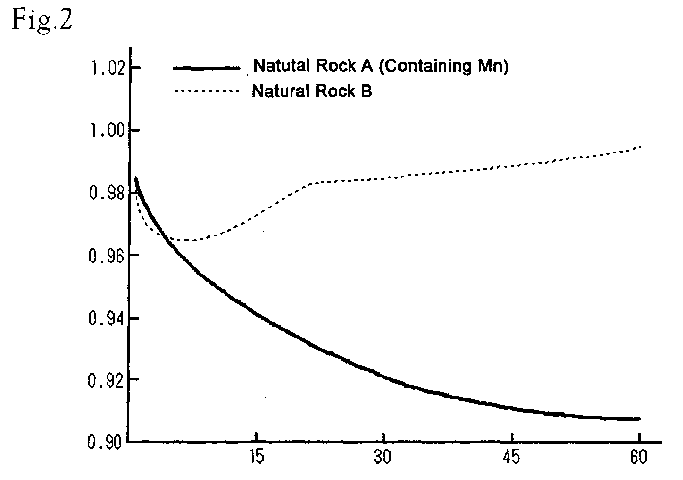

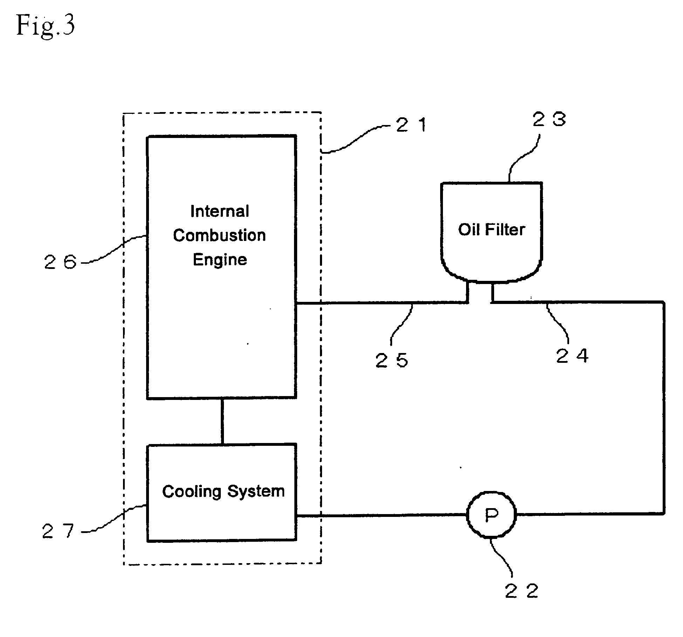

The invention will be described below with reference to a preferred embodiment of the invention. Fig. 1 is a cross sectional view of a deterioration control oil filter of an embodiment; Fig. 2 is a comparative chart showing a decreasing ratio of dissolved oxygen between mineral particles containing Mn and mineral particles without Mn; and Fig. 3 is a block diagram showing an exemplary arrangement of the deterioration control oil filter of the embodiment.

In Fig. 3, a lubricating oil system 21 includes a pump 22 for circulating the lubricating oil and an oil filter 23 for purifying the lubricating oil, which are connected to each other by an oil inlet pipe 24 and an oil outlet pipe 25 formed into piping (or horse, or the like) with a heat resistant/oil resistant material.

In the system, at least the lubricating oil is isolated from the atmosphere. Preferably, the system is isolated from the atmosphere in its entirety, which contributes to avoid contamination of oxygen and moisture.

If the oil is kept contacting with the atmosphere, oxygen and moisture in the atmosphere will gradually be dissolved into the oil. The oxygen and the moisture dissolved in the oil oxidize the oil to thereby let the oil deteriorated. Also, once the deterioration starts, a chain reaction of deterioration occurs to promote further oxidization. Therefore, prevention of initial oxidization, which triggers the chain reaction of deterioration, will contribute to suppression of the deterioration of the oil.

The oxidization allows the oil molecules to have free radical and, if the oil is heated under the circumstances, deterioration starts due to a heat polymerization reaction. Such mechanism caused by the isolation from the atmosphere is suppressed in order to suppress the deterioration of the oil.

The lubricating oil system 21 includes an internal combustion engine 26 such as a gasoline-powered engine or a diesel engine and a cooling system 27 for cooling the lubricating oil such as an oil cooler or a radiator. The lubricating oil is also used as a cooling medium for decreasing a sliding resistance of sliding surfaces of, for example, a piston and a cylinder for the internal combustion engine 26, preventing the sliding surfaces from being scraped, and preventing the internal combustion engine 26 from overheating. The pump 22 circulates the lubricating oil discharged from the lubricating oil system 21 so as to return the oil to the lubricating oil system 21 through the oil filter 23.

The oil filter 23, as shown in Fig. 1, forms the casing 29 together with the cover 28 such that it is isolated from the atmosphere and includes therein the mineral particle chamber 31 including a lot of mineral particles 30. This mineral particle chamber 31 is provided in the casing 29 interspacially at an upper portion of the casing.

The oil inlet pipe 24 is connected to the bottom center of the casing 29 and discharges the lubricating oil upwardly from the bottom. Also, an oil inlet port of the oil inlet pipe 24 is provided with a wire-netting of an appropriate size, which prohibits the mineral particles from flowing out of the casing 29. The oil outlet pipe 25 is connected to the bottom of the casing 29 avoiding a position where there is the oil inlet pipe 24, and feeds the lubricating oil to the internal combustion engine 26 after the lubricating oil having discharged upwardly from the oil inlet pipe 24 goes around in an up-and-down direction. Similarly, a joint portion between the oil outlet pipe 25 and the casing 29 is provided with a wire-netting of an appropriate size, which does not allow the mineral particles flow out of the casing 29.

At the time, the lubricating oil discharged upwardly from the oil inlet pipe 24 in the casing 29 embosses the mineral particles 30 at a top center thereof by a pressure caused by the discharge of the lubricating oil, thereby agitating the entire group of the mineral particles 30. In other words, since there is a space provided at the upper portion of the casing, the mineral particles flows and jets upwardly.

Accordingly, the mineral particles 30 breaks up or are scraped, while they are agitated, to be micronized, thereby securing wider surface areas of the mineral particles. As such, an effect of purifying pollutants, floating matters, or the like in the lubricating oil increases as well as oxygen (dissolved oxygen) contained in the lubricating oil can be decreased.

When the lubricating oil is introduced into the casing 29, components such as Mn or the like of the mineral particles 30 dissolves in the lubricating oil. The components such as Mn having dissolved in the lubricating oil reacts with oxygen contained in the lubricating oil to produce oxide. As such, oxygen contained in the lubricating oil is removed. The most serious factor, which deteriorates the oil is the oxygen dissolved in the oil, such that the oil can be suppressed from being deteriorated if oxygen is removed.

As described above, removal of the dissolved oxygen is considered to be done not by adsorption but by oxidation. Namely, it is so considered that the dissolved oxygen can be removed by producing metal oxide. Here, in order to promote dissolution of Mn, Fe, Mi, Ca, or the like and the oxidation reaction, the oil and the mineral particles 30 may be heated within the oil filter 23. In a case where the removal is performed by adsorption, adsorption gas is eliminated due to a heating process, such that an effect of removing the dissolved oxygen decreases. However, since the present invention employs the oxidation process in order to remove the dissolved oxygen, an effect of removing the oxygen increases. In the meantime, oxidation of the oil is also promoted by the heating process; however, the effect of removing the dissolved oxygen can be effective since oxidation of Mn or the like gains ascendancy over oxidation of the oil in view of a balance therebetween.

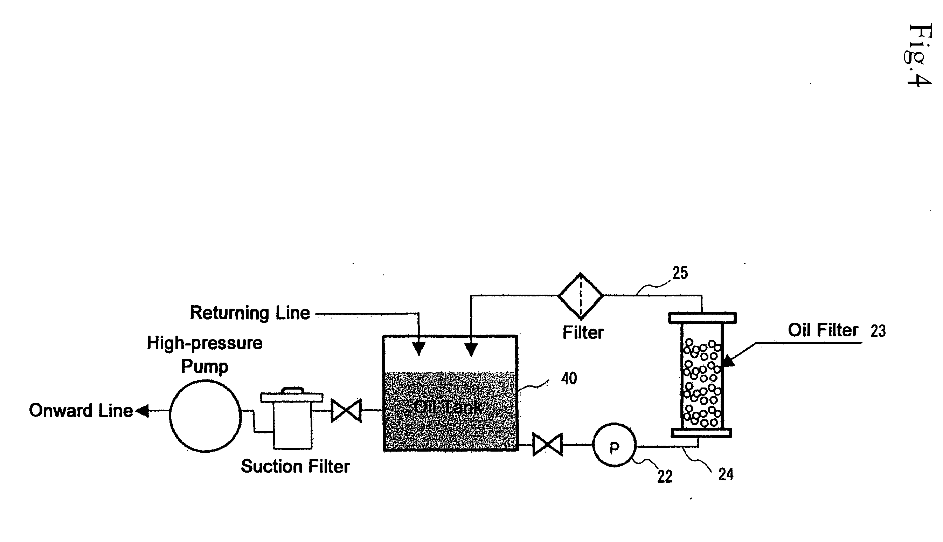

Fig. 4 is a conceptual diagram illustrating an oil deterioration control system including the above described oil filter 23.

The system includes an oil tank 40 for reserving an oil from a line, a deterioration control oil filter 23, and a pump 22 for circulating the oil from the oil tank 40 through the deterioration control oil filter 23.

A filter for removing sludge is provided between the oil tank 40 and the deterioration control oil filter 23.

In the present embodiment, the oil tank 40 is isolated from the atmosphere. Therefore, the oil within the oil tank 40 is prevented from being contaminated by moisture and oxygen from the outside. It is preferable that the entire system is isolated from the atmosphere. More preferably, a cooling means is provided around the oil tank 40 in order to cool down the oil within the oil tank 40.

In this text, the mineral particles 30 are mineral particles containing mangan (Mn) or the like formed by crushing a chlorite schist. The chlorite schist has a rock property of a mudstone quality and is contained in, for example, a Sanbagawa metamorphic rock. The Sanbagawa metamorphic rock is classified into a carbonaceous natural rock in view of the mineralogy, and its generic relation is a graphite schist or a sericitic sandstone having such a structure that one rock includes the chlorite schist as a different rock in a sandwiched manner with a graphite being slightly combined thereto.

The Sanbagawa metamorphic rock is a mineral ore composed of a group of fault clay, which is produced from the Paleozoic strata of the oldest geological layer in Japan. A metamorphic rock such as the Sanbagawa metamorphic rock is so structured that an existing rock is subjected to heat, pressure, and intrusion by an eruptive rock within the earth crust to be a rock having a different nature. The resulting rock is classified to a contact metamorphic rock (thermal metamorphic rock) and a regional metamorphic rock according to a process the rock was formed.

A rock formed under the influence of heat is referred to as the contact metamorphic rock, and a rock formed under the influence of mainly pressure or pressure and heat over a broad zone is referred to as the regional metamorphic rock. The Sanbagawa metamorphic rock is classified to the regional metamorphic rock.

In the case of the regional metamorphic rock, a metamorphism occurs under the unsymmetrical pressure of the earth crust, resulting in that a thin layer having different mineral composition is formed into a schistose structure. The thin layer having the schistose structure of the regional metamorphic rock is provided with billions and billions of cleaves under the unsymmetrical pressure of the earth crust and a recrystallization occurs along the cleaves. A growth direction of the crystallization is either parallel to the cleaves or a direction of the unsymmetrical pressure of the earth crust.

The chlorite schist has a property that it tends to be dissolved in liquid such as water or the lubricating oil (soft) since it generally has the above described mudstone quality. Therefore, it has been so considered that it is insane to use the chlorite schist, which tends to be dissolved in water for water purification or the like without subjecting to any preliminary process. Therefore, study has been performed to use ceramic particles which is less dissolved in water, maifanshi particles made of a granite, tourmaline particles made of a granite, or the like for water purification or the like.

The chlorite schist includes components of carbon, magnetic iron ore, mispickel, or the like together with bivalent iron and tervalent iron at a rate about 3:1, and therefore, the oxidizing property and the reduction property can be repeated using the carbon as a medium.
Such an effect is known that ions of the tervalent iron acquire negative charges to thereby change themselves to ions of the bivalent iron and generate an energy of 771 mV at the time, while the ions of the bivalent iron change themselves to ions of the tervalent iron upon acquiring the energy and release the negative charges (negative ions) at the time. Since motion of the negative charges is flow of electricity, there occurs magnetic field lines.
It is so considered that the bivalent iron and the tervalent iron contained in the chlorite schist, which was just dug out from a mining place, are under an unstable condition since oxidation has not been promoted yet. As they contact the ambient air (oxygen) after being dug out, they gradually absorb the ambient air to become a stable iron oxide. The iron is generally oxidized in such a manner that the bivalent iron is bound with oxygen to be FeO and the tervalent iron is bound with oxygen to be Fe₂O₃. However, it is so considered that, for example, when the bivalent iron is oxidized, the bivalent iron is initially oxidized and further oxidization of the resulting oxide of the bivalent iron produces an oxide of the tervalent iron. When the tervalent iron oxide is produced from the bivalent iron oxide, as described above, it is so considered that the negative charges (negative ions) are released when the bivalent iron becomes the tervalent iron.

It is also so considered that the ambient substances (air, liquid, solid matters, or the like including oxygen) are dissolved since the ambient oxygen is absorbed during the above-described oxidation of the iron. The chlorite schist used in the present invention produces magnetic (magnetic field line) as described above, such that a size of cluster of water molecules can be made larger. As such, binding between the oil and water becomes weaker, such that oil having been bound with water attached to a wall surface of a vessel or the like will be peeled off the wall surface and liquid in which oil and water are mixed and emulsified is isolated again into the oil and water (increasing a degree in separation).

The chlorite schist used in the present invention has a continuous poromeric shape including pores, for example, due to the above described recrystallization and such a property that this poromeric shape would not be lost even if the chlorite schist is grinded into fine powder of a size between 0.7 and 40 µm. Therefore, the chlorite schist is less susceptible to clogging of pores due to floating matters or the like and is likely to create colonies of microorganism, which serves to dissolve organic substances since it includes pores. The chlorite schist has a wide surface area per unit volume, i.e. between 2700 and 3500 square meters. Therefore, it has a wide adsorption area for performing purification. In a case
where the powder of the chlorite schist used in the present invention is added into water, it is known that the chlorite schist has an effect of removing scales or the like attached to a conducting tube owing to the above described negative ions of the chlorite schist, a magnetic effect, or the like.

Preferably, the mineral ore used in the present invention has a composition as shown in Table 1.

**[Table1]**

| Analysis Result | | | |
|---|---|---|---|
| Name of Element | Result [wt%] | Name of Element | Corresponding Value [wt%] |
| Al | 2-10 | Al₂O₃ | 15.40 |
| B | 0.005-0.05 | B₂O₃ | 0.03 |
| Ba | 0.01-0.1 | BaO | 0.07 |
| Ca | 0.1-1 | CaO | 1.04 |
| Fe | 2-10 | Fe₂O₃ | 6.08 |
| K | 0.5-3 | K₂O | 2.76 |
| Mg | 0.5-3 | MgO | 1.64 |
| Mn | 0.1-1 | MnO | 0.36 |
| Na | 0.5-3 | Na₂O | 2.63 |
| Si | Main component | SiO₂ | 67.02 |
| Sr | 0.005-0.05 | SrO | 0.01 |
| Ti | 0.1-1 | TiO₂ | 0.42 |

A mineral ore containing Mn is specifically preferred among mineral ores containing Mn, Ni, Fe, or Ca.

More specifically, a mineral ore containing Mn of equal to or larger than 0.05 wt% is more preferable. If a containing amount of Mn is less than 0.05 wt%, it takes a long time to produce an effect of deterioration control.
On the other hand, an upper limit of preferable containing amount of Mn is 100 wt%. Namely, the mineral ore may be a metal Mn. The mineral ore of the present invention includes metal or alloy. However, the mineral ores other than metal or alloy is preferred since they have better effect for suppressing deterioration than that of metal or alloy.

Fig. 2 illustrates a comparative chart showing a reduction ratio of dissolved oxygen in a case where the mineral particles 30 of the present invention contain Mn and a reduction ratio of dissolved oxygen in a case where the mineral particles 30 of the present invention do not contain Mn.

As shown in Fig. 2, in such a case that the mineral particles 30 contain Mn, the dissolved oxygen can be reduced effectively.

In the meantime, the oil outlet port of the oil inlet pipe 24 is provided with a filter (wire-netting or the like) 32 for preventing the mineral particles 30 from falling down. Similarly, a port through which the oil flows out into the oil outlet pipe 25 is also provided with a filter (wire-netting of the like) for preventing the mineral particles 30 from falling down.

Preferably, an inner diameter D of the casing 28 is in a range between 6 and 40 cm. An inner diameter d of the conducting tube including the filter 32, if the casing 28 has a diameter D, is preferred to be d/D=1/5-1/2, more preferably be d/D=1/4-1/3. If a value of d/D is small, there remains a portion where the mineral particles 30 do not flow, such that the lubricating oil will hardly get across the entire mineral particles 30. Further, a conducting pressure of the lubricating oil will become larger. If the value of d/D is large, a removing effect will decrease.

Preferable height of the mineral particles within the casing 28 is in a range between 1 and 3 m.

Preferably, the lubricating oil is introduced into the casing 28 at a linear speed of a range between 3 and 8 m/sec. If the linear speed is out of this range, regardless that a value is beyond the range or below the range, the effect of removing oxygen will be decreased comparing to a case where the linear speed is within the above range.

### INDUSTRICAL APPLICABILITY

According to the deterioration control oil filter of claim 1, the lubricating oil circulates in the casing in an up-and-down direction, such that a long filtration functioning distance using the mineral particles can be secured and thus increasing of an effect for purifying pollutants, floating matters, or the like in a lubricating oil or a hydraulic oil as well as increasing of an effect for suppressing the oxidation of the lubricating oil or the hydraulic oil can be realized.

According to the deterioration control oil filter of claim 2, use of the mineral particles containing mangan will enable the dissolved oxygen within the lubricating oil to decrease effectively.

According to the deterioration control oil filter of claim 3, the oil will be suppressed from being deteriorated.

According to a deterioration control oil system of claim 4, the oil will be suppressed from being deteriorated.

According to the deterioration control oil system of claim 5, the oil will further be suppressed from being deteriorated.

According to a method of removing oxygen of claim 6, oxygen contained in the oil can be removed inexpensively and with ease.

According to a method of removing oxygen of claim 7, a deterioration control for a lubricating oil and a hydraulic oil can be performed with ease.

## Claims

1. A deterioration control oil filter comprising:
an oil inlet pipe connected to a bottom center of a casing for discharging a lubricating oil into the casing;
an oil outlet pipe connected to a bottom of the casing; and
mineral particles provided in the casing interspacially at an upper portion of the casing.

2. The deterioration control oil filter as claimed in claim 1, wherein the mineral particles contain mangan, nickel, iron, or the like.

3. The deterioration control oil filter as claimed in either one of claim 1 or claim 2, wherein the casing is isolated from the atmosphere.

4. A deterioration control oil system comprising:
an oil tank for reserving an oil from a line;
an oil filter including an oil inlet pipe connected to a bottom center of a casing for discharging the lubricating oil into the casing, an oil outlet pipe connected to a bottom of the casing, and mineral particles provided in the casing interspacially at an upper portion of the casing; and
a pump for circulating the oil from the oil tank through the deterioration control oil filter.

5. The deterioration control oil system as claimed in claim 4, wherein the system is isolated from the atmosphere in its entirety.

6. A method of removing oxygen, wherein an oil contains Mn, Fe, Ni, or the like dissolved therein to oxidize those Mn, Fe, Ni, or the like by oxygen contained in the oil, thereby removing oxygen contained in the oil.
